# DEMANDE DE BREVET EUROPEEN

(11) **EP 1 378 647 A1**
(43) Date de publication de la demande: **07.01.2004**
(21) Numéro de dépôt: 03291668.6
(22) Date de dépôt: 04.07.2003
(51) Int. Cl.: F02D 41/12, F02D 11/10, B60K 41/14

(54) **Régulation du couple en décélération d'un moteur thermique de véhicule comportant un dispositif de transmission continue de puissance (CVT)**

(30) Priorité: 04.07.2002 FR 0208364
(71) Demandeur: Peugeot Citroen Automobiles SA, 78140 Vélizy Villacoublay (FR)
(72) Inventeur: Laeuffer, Jacques Augustin, 75007 Paris (FR)
(74) Mandataire: Martin, Jean-Jacques

(57) **Abrégé**

L'invention concerne un procédé de régulation d'un moteur thermique assurant la propulsion d'un véhicule automobile, lorsque ce dernier roule en descente, caractérisé en ce que, le véhicule comportant un dispositif de transmission continue de puissance, le procédé consiste :
- à détecter le couple à la roue demandé par le conducteur (C_{ROUE}),
- à déterminer la puissance du moteur thermique souhaitée (P_{MTH})
- et, lorsque la puissance du moteur thermique est négative, à déterminer la valeur de référence du régime du moteur thermique (Réf.ω_{MTH}) telle que, en injectant une quantité minimale de carburant, la dite puissance soit obtenue et enfin,
- à commander le moteur thermique pour que son régime corresponde à cette valeur de référence.

Pour déterminer la valeur de référence du régime du moteur thermique, lorsque la puissance souhaitée du moteur thermique est négative, cette dernière est comparée à la valeur maximale de la puissance pouvant être dissipée par le moteur thermique (P_{DMAX}).

## Description

L'invention concerne le domaine des véhicules automobiles dont la propulsion est assurée par un moteur thermique.

Elle concerne plus particulièrement un procédé de régulation du moteur thermique, lorsque le véhicule automobile est en descente et réalise notamment une descente de col.

De façon classique, en descente, le conducteur d'un véhicule automobile utilise le frein moteur afin d'éviter de faire surchauffer les freins mécaniques.

Par ailleurs, le véhicule étant en descente, l'objectif est de ne pas consommer de carburant, ou seulement une quantité minimale.

Compte tenu des rayons de courbure de la route, ainsi que de son état de surface, il est nécessaire que le véhicule ait une certaine vitesse, souhaitée par le conducteur.

Par ailleurs, compte tenu de la pente de la route et de la vitesse souhaitée pour le véhicule, une certaine puissance de freinage est nécessaire.

A l'heure actuelle, lorsque le véhicule comporte une boîte de vitesses manuelle, le conducteur est souvent confronté à un choix difficile entre deux rapports de vitesse, par exemple entre un rapport de seconde et un rapport de troisième.

En effet, en troisième, le frein moteur peut se révéler insuffisant et doit donc être complété par les freins mécaniques. Par ailleurs, en seconde, ce frein moteur peut se révéler trop important et doit donc être compensé par une injection de carburant dans le moteur.

Ainsi, aucune de ces deux solutions n'est entièrement satisfaisante puisqu'elles conduisent soit à un surchauffage des freins mécaniques, soit à une consommation inutile de carburant.

L'invention a pour objet de pallier ces inconvénients en proposant un procédé de régulation du moteur thermique, lorsque le véhicule automobile est en descente, ce procédé permettent d'ajuster la vitesse du véhicule à la valeur souhaitée par le conducteur, et cela quelle que soit la pente, sans consommer de carburant et sans faire chauffer les freins mécaniques, ou seulement de façon très limitée.

Ainsi, l'invention concerne un procédé de régulation d'un moteur thermique assurant la propulsion d'un véhicule automobile, lorsque ce dernier roule en descente, caractérisé en ce que, le véhicule comportant un dispositif de transmission continue de puissance, le procédé consiste :
- à détecter le couple à la roue demandé par le conducteur,
- à déterminer la puissance du moteur thermique souhaitée
- et, lorsque ladite puissance du moteur thermique est négative, à déterminer la valeur de référence du régime du moteur thermique telle que, en injectant une quantité minimale de carburant, ladite puissance soit obtenue et enfin,
- à commander le moteur thermique pour que son régime corresponde à cette valeur de référence.

On comprend que lorsque la puissance souhaitée du moteur thermique est positive, le régime du moteur thermique est déterminé classiquement dans les dispositifs de commande usuellement prévus dans le véhicule, notamment à l'aide de cartographies préalablement établies donnant le régime du moteur pour une consommation optimale, compte tenu des autres paramètres déterminants.

Un dispositif de transmission continue de puissance est un organe de transmission permettant de réaliser tous les rapports de transmission contenus dans un intervalle déterminé.

On comprend donc que l'utilisation d'un tel dispositif de transmission permet d'adapter le régime du moteur thermique exactement à la valeur de référence requise pour obtenir le couple à la roue permettant de stabiliser le véhicule automobile à la vitesse souhaitée par le conducteur, et ceci sans utiliser les freins mécaniques et sans injection inutile de carburant.

Le dispositif de transmission continue de puissance peut être du type CVT (Continuous Variable Transmission), ou encore du type IVT (Infinitely Variable Transmission).

Un dispositif du type CVT s'adapte de façon continue aux changements de situation, concernant notamment la pente de la route ou la vitesse souhaitée, sans que le conducteur n'ait à changer le rapport de vitesse, comme avec une boîte de vitesses mécanique, ni à subir des variations rapides de couple lors des changements de rapports de vitesse, comme avec une boîte de vitesses mécanique pilotée ou une boîte de vitesses automatique.

Un dispositif du type IVT présente les mêmes avantages qu'un dispositif de type CVT. Un dispositif de type IVT présente en outre l'avantage de permettre la mise en oeuvre du procédé selon l'invention même à une très faible vitesse du véhicule, par exemple dans des épingles à cheveux, sans qu'il soit nécessaire d'ouvrir l'embrayage.

Ceci ne serait pas possible avec un dispositif du type CVT.

De préférence, le procédé consiste à comparer la puissance souhaitée du moteur thermique, de valeur négative, à la valeur maximale de la puissance pouvant être dissipée par le moteur thermique (P_{DMAX}).

La valeur de P_{DMAX} est égale à : - 20 N.m.? _{RALENTI},
où ? _{RALENTI} est le régime du moteur thermique au ralenti.

Si la puissance du moteur thermique est inférieure à cette valeur maximale, le procédé consiste à déterminer la valeur de référence du régime du moteur thermique (Réf. ? _{MTH}) par la relation :
Réf. ?_{MTH}= - P_{MTH}/20N.m ou encore à partir d'une cartographie préalablement établie.

Si la puissance du moteur thermique est supérieure à cette valeur maximale, le procédé consiste à fixer la valeur de référence du régime du moteur thermique à celle du régime du ralenti.

En effet, le régime du moteur thermique doit rester à un régime supérieur ou égal à celui correspondant au ralenti.

Ainsi, quand la puissance du moteur thermique est supérieure à la valeur maximale de la puissance dissipée P_{DMAX}, il est nécessaire de réinjecter un peu de carburant pour compenser partiellement les pertes de pompage.

Comme indiqué précédemment, à très faible vitesse du véhicule, il faut ouvrir l'embrayage lorsque le dispositif de transmission de puissance est du type CVT et cette manoeuvre est inutile dans le cas d'un dispositif du type IVT.

A titre d'exemple, la détection du couple à la roue demandé par le conducteur peut être réalisée en mesurant le degré d'enfoncement de la pédale d'accélérateur, ou encore par le degré d'enfoncement de la pédale de frein.

Cette détection peut également être réalisée au moyen d'une demande de vitesse, ou bien d'une demande de couple à la roue, ou encore une demande d'accélération du véhicule, ou encore par une combinaison de ces différentes demandes.

L'invention concerne également un système de régulation d'un moteur thermique permettant de mettre en oeuvre ce procédé.

Elle concerne enfin un véhicule automobile équipé d'un dispositif de transmission continue de puissance qui comporte un tel système de régulation.

L'invention sera mieux comprise et d'autres buts, avantages et caractéristiques de celle-ci apparaîtront plus clairement à la lecture de la description qui suit et qui est faite en référence aux dessins annexés, sur lesquels :
- la figure 1 illustre schématiquement un tronçon de route sur laquelle est destiné à se déplacer un véhicule automobile,
- la figure 2 comporte cinq courbes qui illustrent, en fonction du temps et sur le tronçon de route illustré à la figure 1, l'évolution de la vitesse du véhicule, du couple à la roue ainsi que de la puissance, du couple et du régime du moteur thermique et
- la figure 3 est un algorithme illustrant le procédé de régulation du moteur thermique selon l'invention.

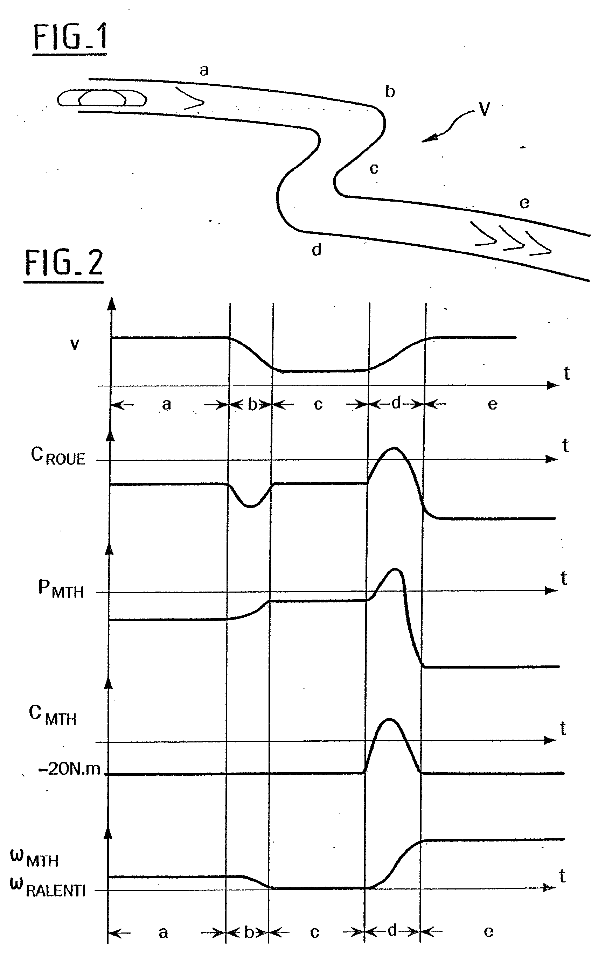

La figure 1 représente donc un tronçon de route correspondant à une descente de col comportant un virage V.

La portion a de la route est située en amont du virage V, la portion b correspond à l'entrée du virage, la portion c au virage lui-même, la portion d à la sortie du virage. Enfin, la portion e est située en aval du virage V.

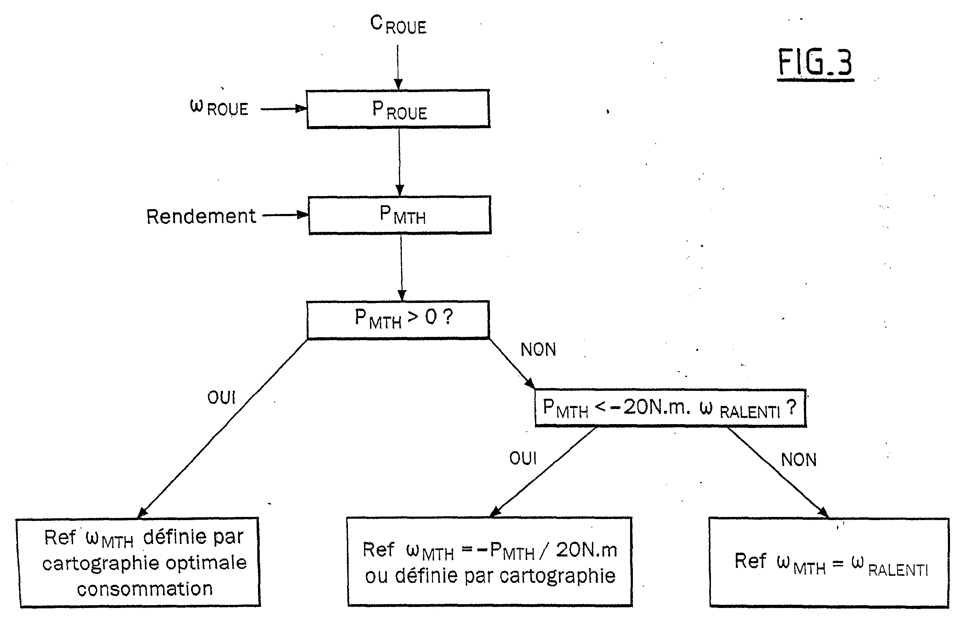

Le procédé de régulation selon l'invention sera décrit pour un véhicule automobile passant de la portion a en amont du virage à la portion e en aval du virage V, en référence aux figures 2 et 3.

Le procédé selon l'invention consiste tout d'abord à détecter la demande du conducteur qui se traduit en une demande de couple à la roue (C_{ROUE}). Cette corrélation peut notamment être déterminée par le degré d'enfoncement de la pédale d'accélération.

Ainsi, dans la portion a du virage V, le couple à la roue est constant.

Dans l'exemple illustré à la figure 2, C_{ROUE} est négatif. Ceci correspond à une route en forte pente.

La puissance à la roue souhaitée (P_{ROUE}) est alors calculée en multipliant C_{ROUE} par la vitesse des roues (? _{ROUE}).

En tenant compte du rendement approximatif de la chaîne de traction, on peut en déduire la puissance souhaitée du moteur thermique, soit P_{MTH}.

Dans l'exemple illustré à la figure 2, cette puissance est négative.

Cependant, si cette puissance devait être positive, les cartographies conventionnelles permettraient de déterminer le régime du moteur thermique (? _{MTH}) pour une consommation optimale.

Sur la figure 2, la puissance du moteur thermique est négative dans la portion a et, conformément à l'algorithme illustré à la figure 3, la valeur de P_{MTH} est comparée à la valeur maximale de la puissance dissipée par le moteur qui est égale à :
P_{MAX} = -20N.m.? ralenti, où ? _{RALENTI} correspond au régime du moteur au ralenti.

Cette valeur correspond donc à la puissance maximale qui peut être dissipée par pertes de pompage ou encore sous forme de frein moteur.

Dans la portion a du virage V, la valeur du couple du moteur thermique est - 20N.m et la puissance thermique est inférieure à P_{MAX}.

La valeur de référence du régime du moteur thermique Réf.? _{MTH} est supérieure à la valeur ? _{RALENTI} et elle est défini par la relation :
Réf.? _{MTH} = - P_{MTH} : 20 N.m.

La valeur Réf.? _{MTH}. pourrait également être définie par cartographie.

Ainsi, le procédé de régulation selon l'invention consiste à commander le moteur thermique pour que son régime corresponde à la valeur Réf.? _{MTH} ainsi déterminée.

Dans la portion b du virage, le conducteur du véhicule souhaite ralentir ce dernier. Ceci se traduit notamment par un degré moindre d'enfoncement de la pédale d'accélérateur.

Ainsi, dans la portion b du virage V, la vitesse v du véhicule diminue, ainsi que le couple à la roue (C_{ROUE}).

Comme précédemment, le procédé consiste à déterminer la puissance souhaitée du moteur thermique P_{MTH}, en fonction de la vitesse actuelle des roues et du rendement.

Si, comme dans l'exemple illustré à la figure 2, la puissance P_{MTH} est négative, on procède encore à sa comparaison avec P_{DMAX}.

Dans cet exemple, la puissance P_{MTH} est inférieure à P_{DMAX}, la puissance du moteur thermique dans la portion b étant inférieure à cette même puissance dans la portion a du virage et la valeur Réf.? _{MTH} est déterminée comme précédemment.

Sur la figure 2, cette valeur de référence diminue jusqu'à atteindre la valeur de ralenti à la fin de la portion b.

Le véhicule automobile est alors dans la portion c, c'est-à-dire à l'intérieur du virage V.

Dans cette portion c du virage, le conducteur du véhicule automobile maintient la vitesse v constante et sensiblement égale à sa valeur à la fin de la portion b.

La valeur de C_{ROUE} reste également constante dans cette portion c.

Comme précédemment, la valeur P_{MTH} est calculée à partir de la valeur de C_{ROUE}, ? _{ROUE} et du rendement.

La puissance du moteur thermique est toujours négative et on la compare à la valeur P_{DMAX}.

Dans la mesure où cette valeur est supérieure à P_{DMAX,} la valeur de référence du régime du moteur thermique (Réf. ? _{MTH}) est fixée à ? _{RALENTI}, c'est-à-dire au régime du moteur au ralenti.

Quand le véhicule automobile sort du virage et aborde donc la portion d, le conducteur du véhicule accélère pour augmenter la vitesse v du véhicule et le couple C_{ROUE} demandé à la roue augmente puis diminue, la vitesse souhaitée du véhicule étant obtenue, à la fin de la portion d.

Dans cette même portion d, lorsque le couple à la roue augmente, la puissance souhaitée du moteur thermique P_{MTH} devient positive.

Dans cette période-ci, le régime du moteur thermique est déterminé de façon classique par le dispositif de commande présent sur le véhicule qui, au moyen de cartographies préalablement établies, détermine le régime du moteur pour une consommation optimale.

Le couple du moteur thermique augmente lui aussi, le frein moteur n'étant pas utilisé lorsque le couple demandé à la roue augmente, le régime du moteur quittant parallèlement le régime du ralenti.

A la fin de la portion d, le véhicule a atteint la valeur v souhaitée par le conducteur, valeur qui restera constante sur la portion e.

Le couple demandé à la roue est redevenu négatif et reste constant dans la portion e.

De même, la puissance souhaitée du moteur thermique est redevenue négative et reste constante dans la portion e.

Par ailleurs, le couple du moteur thermique revient, à la fin de la portion d à la valeur de -20 N.m, correspondant au couple minimal et reste constant dans la portion e.

En ce qui concerne le régime du moteur thermique, celui-ci est déterminé par le procédé selon l'invention, dès que la valeur de P_{MTH} devient négative, c'est-à-dire dans la portion d et il reste ensuite à une valeur constante dans la portion e.

Ainsi, le procédé et le système de régulation selon l'invention permet, grâce à un dispositif de transmission continu de puissance, d'adapter au plus près le régime du moteur thermique en limitant à la fois la consommation de carburant et l'utilisation des freins mécaniques et ceci, tout en bénéficiant des avantages liés à l'utilisation d'un tel dispositif de transmission, notamment la suppression des à-coups liés aux variations rapides de couple lors des changements de vitesse.

## Revendications

1. Procédé de régulation d'un moteur thermique assurant la propulsion d'un véhicule automobile, lorsque ce dernier roule en descente, **caractérisé en ce que**, le véhicule comportant un dispositif de transmission continue de puissance, le procédé consiste :
- à détecter le couple à la roue demandé par le conducteur (C_{ROUE}),
- à déterminer la puissance du moteur thermique souhaitée (P_{MTH})
- et, lorsque la puissance du moteur thermique est négative, à déterminer la valeur de référence du régime du moteur thermique (Réf. ? _{MTH}) telle que, en injectant une quantité minimale de carburant, la dite puissance soit obtenue et enfin,
- à commander le moteur thermique pour que son régime corresponde à cette valeur de référence.

2. Procédé selon la revendication 1, **caractérisé en ce que** pour déterminer la valeur de référence du régime du moteur thermique (Réf.? _{MTH}), lorsque la puissance souhaitée du moteur thermique est de valeur négative, le procédé consiste à comparer la puissance souhaitée du moteur thermique à la valeur maximale de la puissance pouvant être dissipée par le moteur thermique (P_{DMAX}) et
- si la puissance du moteur thermique est inférieure à cette valeur maximale, à déterminer la valeur de référence du régime du moteur thermique au moyen de relations prédéterminées et
- si la puissance du moteur thermique est supérieure à cette valeur maximale, à fixer la valeur de référence du régime du moteur thermique à celle du régime du ralenti.

3. Procédé de régulation selon la revendication 2, **caractérisé en ce que** la valeur maximale de la puissance pouvant être dissipée par le moteur thermique (P_{DMAX}) est égale à :
P_{DMAX} = - 20N.m.? _{RALENTI}, où ? _{RALENTI} est le régime du moteur thermique au ralenti.

4. Procédé de régulation selon l'une des revendications 2 ou 3, **caractérisé en ce que**, lorsque la puissance du moteur thermique est inférieure à P_{DMAX} , la valeur de référence du régime du moteur thermique est définie par une cartographie préalablement établie ou encore par la relation :
Réf. ? _{MTH} = - (P_{MTH})/ 20N.m

5. Procédé de régulation selon l'une des revendications 1 à 4, **caractérisé en ce que** la détection du couple à la roue demandé par le conducteur est réalisée en mesurant le degré d'enfoncement de la pédale d'accélérateur ou encore par le degré d'enfoncement de la pédale de frein.

6. Système de régulation d'un moteur thermique assurant la propulsion d'un véhicule automobile, lequel comporte un dispositif de transmission continu de puissance, ce système de régulation comportant :
- des moyens pour détecter le couple à la roue demandé par le conducteur,
- des moyens pour déterminer la puissance souhaitée du moteur thermique, en fonction du couple à la roue, de la vitesse des roues et du rendement de la chaîne de traction,
- des moyens pour déterminer, lorsque la puissance du moteur thermique est négative, la valeur de référence du régime du moteur thermique (Réf.? _{MTH}) telle que, en injectant une quantité minimale de carburant, ladite puissance soit obtenue et
- des moyens de commande du moteur thermique pour ajuster son régime à cette valeur de référence.

7. Système de régulation selon la revendication 6, caractérisé en que les moyens pour déterminer la valeur de référence du régime du moteur thermique (Réf.?_{MTH}) comprennent des moyens de comparaison de la puissance souhaitée du moteur thermique à la valeur maximale de la puissance pouvant être dissipée par le moteur thermique (P_{DMAX}), la valeur de référence du régime du moteur thermique étant une valeur fixe, correspondant au régime du ralenti (? _{RALENTI}), si la puissance du moteur thermique est supérieure à cette valeur maximale et déterminée par des relations prédéterminées, dans le cas contraire.

8. Véhicule automobile équipé d'un dispositif de transmission continue de puissance, comportant un système de régulation selon les revendications 6 et 7.

9. Véhicule automobile selon la revendication 8, **caractérisé en ce que** le dispositif de transmission de continu de puissance est du type CVT ou IVT.
